# EUROPEAN PATENT SPECIFICATION

(11) **EP 3 308 622 B1**
(45) Date of publication and mention of the grant of the patent: **10.06.2020**
(21) Application number: 17195968.7
(22) Date of filing: 11.10.2017
(51) Int. Cl.: A01D 34/416

(54) **POWERED SPOOL LINE WINDING MECHANISM FOR STRING TRIMMER**
ANGETRIEBENE SPULENLEITUNGSAUFWICKELEINRICHTUNG FÜR FADENSCHNEIDER
MÉCANISME D'ENROULEMENT DE LIGNE DE BOBINE MOTORISÉ POUR TONDEUSE À FIL

(30) Priority: 13.10.2016 US 201662407599 P; 05.10.2017 US 201715725781
(43) Date of publication of application: 18.04.2018
(73) Proprietor: Black & Decker Inc., New Britain, CT 06053 (US)
(72) Inventor: Sergyeyenko, Oleksiy P., Baldwin, MD 21013 (US); Bailey, Sean, Towson, MD 21286 (US); Kowalski, Michael, TOWSON, MD 21286 (US); Ng, Wong Kun, Cockeysville, MD 21030 (US); French, Timothy Wayne Jr., Hampstead, MD 21074 (US); Phillips, Steven J., Ellicott City, MD 21042 (US); Miller, David, Aberdeen, MD 21001 (US)
(74) Representative: SBD IPAdmin

(56) References cited:
- EP-A1- 2 517 547
- EP-A1- 3 025 573
- WO-A1-2016/150514
- US-B2- 6 952 877

## Description

The present disclosure relates to string trimmers and cutting head and spool designs for winding cutting line onto the spools.

String trimmers are widely used by residential consumer and landscaping professionals to cut grass and other vegetation by using a flexible cutting line extending out from a rotating head. The cutting line wears down during use and requires regular replacement.

One way users have replaced cutting line is to remove the used up spool, and replace it with a new spool with cutting line already wound on. This can be costly because in addition to replacing just the cutting line, the spool is being replaced as well.

Another method has been for users to wind new cutting line onto the used up spool themselves. This often requires the user to disassemble the cutting head, remove the spool, wind line onto the spool, and then replace the spool back onto the cutting head. This can be cumbersome and time consuming, especially for professional landscapers where time is of the essence.

EP2517547A1 discloses a rotary cutter for a mower that includes: a cord; a reel housing the cord, a case and a cover housing the reel therein; a pressing body rotating the reel; and a resilient element elastically supporting the case and the cover. The rotary cutter is configured such that the reel axially moved by rotation of the pressing body so as to come into contact with the pressing body, and the cord is wound around the reel while being clamped in a clearance created between the reel due to the axial movement of the reel.

Accordingly, there remains a need in the art for a simple and quick mechanism to allow a user to replace cutting line on a string trimmer.

WO2016/150514A1 discloses a hand held power tool that receive information indicative of a type of cutting equipment attached to the hand held power tool based on operation of a working assembly in a selected direction of rotation. The working assembly is configured to be bi-directionally rotatable to perform a cutting function using cutting equipment attachable to the hand held power tool.

The drawings described herein are for illustrative purposes only of selected embodiments and not all possible implementations, and are not intended to limit the scope of the present disclosure.
Figure 1 is a perspective of a string trimmer in accordance with the teachings of the present disclosure;
Figure 2 is a view of a user holding the string trimmer of Figure 1;
Figure 3 is a view of the string trimmer cutting head of Fig. 1;
Figure 4 is an internal view of a winding button of Fig. 1;
Figs. 5 is a circuit diagram of a first embodiment of the invention;
Fig. 6 is circuit diagram of a second embodiment of the invention;
Fig. 7 is a circuit diagram of a third embodiment of the invention;
Fig. 8 is a circuit diagram of a fourth embodiment of the invention;
Fig. 9 is a circuit diagram of a fifth embodiment of the invention;
Fig. 10 is a circuit diagram of a sixth embodiment of the invention; and
Fig. 11 is a circuit diagram of a seventh embodiment of the invention;

Corresponding reference numerals indicate corresponding parts throughout the several views of the drawings.

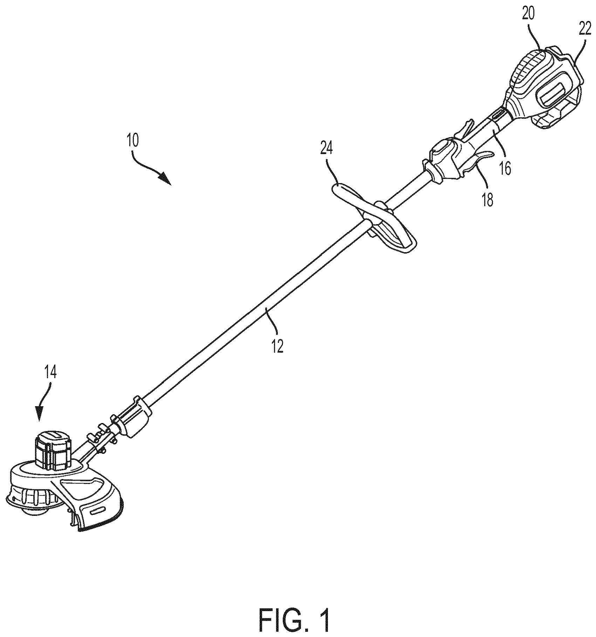

With reference to Fig. 1 of the drawings, a string trimmer constructed in accordance with the teachings of the present disclosure is generally indicated by reference numeral 10. The string trimmer includes a main shaft 12 having a cutting head 14 on a first end. A main handle 16 is located on a second end, opposite the first end. The main handle 16 includes a trigger 18 for powering the cutting head 14. To the rear of the main handle is a battery housing 20 for holding a battery pack 22. The battery pack 22 provides energy to power the cutting head 14. Power to the cutting head can be provided using other know methods, such as AC electricity through a cord or an internal combustion engine, and still fall within the scope of the invention. Just forward of the main handle 16 is an auxiliary handle 24.

The cutting head 14 includes a motor, a spool housing and a spool with cutting line thereon, as is well known in the prior art. As the cutting line is worn down during use, additional cutting line is fed out of the housing using any one of several known methods. For example, US Pat. No. 6,952,877; 7,607,232 and 7,979,991 (hereinafter referred to as the "Pfaltzgraff patents"), disclose a "bump feed' mechanism that feeds out additional cutting line when the cutting head 14 is bumped on the ground.

When the cutting line is eventually used up and needs to be replaced, the Pfaltzgraff patents disclose a mechanism that allows a user to thread new cutting line through the spool without having to remove it from the spool housing. However, in order to wind the cutting line onto the spool, the user must manually rotate a knob on the cutting head to rotate the spool to wind the line. Manually rotating the knob can be time consuming and physically cumbersome.

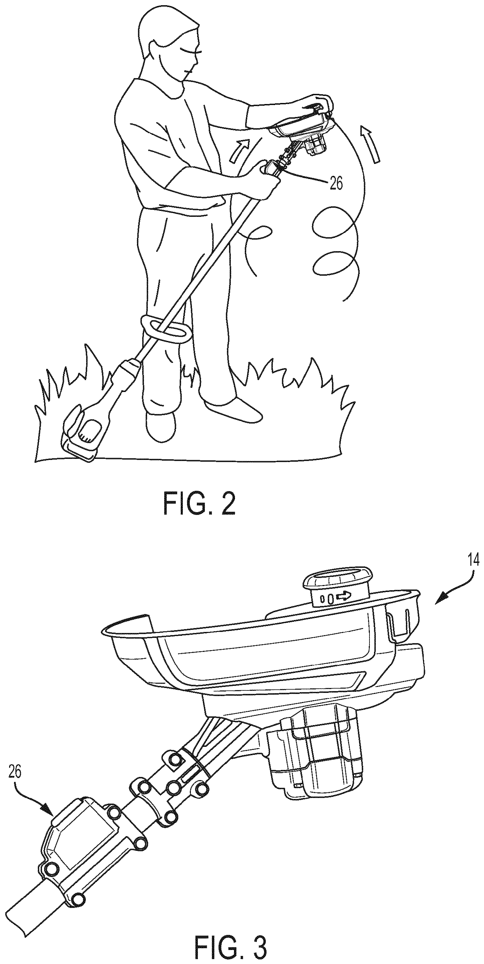

Therefore, in reference to Figs. 2 and 3 and in accordance with the present invention, the string trimmer 10 is provided with a winding button 26 that automatically winds cutting line onto the spool. So, when the cutting line is exhausted from a spool, the user can flip the string trimmer to access the cutting head 14, as shown in Fig. 2, and thread new cutting line through the spool, as described by the Pfaltzgraff patents. However, now rather than manually turning a knob, the user would press the winding button 26, which would automatically rotate the spool to pull in and wind the new cutting line.

It should be noted that the spool itself is rotated, and not the spool housing. As shown in Fig. 2, the user would use one hand to hold the spool housing, and the other to press the winding button 26. The spool housing must remain stationary so that the cutting line is not rotated while it is being pulled into the spool housing and wound onto the spool. If the spool housing were to rotate, cutting line would spin around, potentially whipping and injuring the user. Because both hands are needed for this operation, the winding button 26 is located adjacent the cutting head 14.

When the winding button 26 is actuated, it activates a motor control module 28 that controls the speed and direction of a motor 30. This is the same motor that is used to operate the string trimmer in its operational mode for cutting vegetation. When winding, the motor is reversed from its operational rotational direction, allowing it to wind line onto the spool, and also slowed down from its cutting speed so that winding of line can be done in a safe and controlled manner. The winding button 26 contacts two switches 27a and 27b that are connected to corresponding contacts 26a and 26b, which in turn are connected to the control module 28. The control module 28 can be a PCB that electronically controls the motor or any other similar means known in the art.

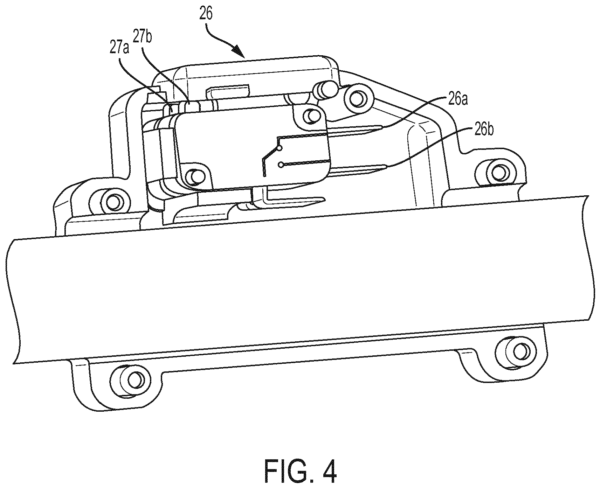

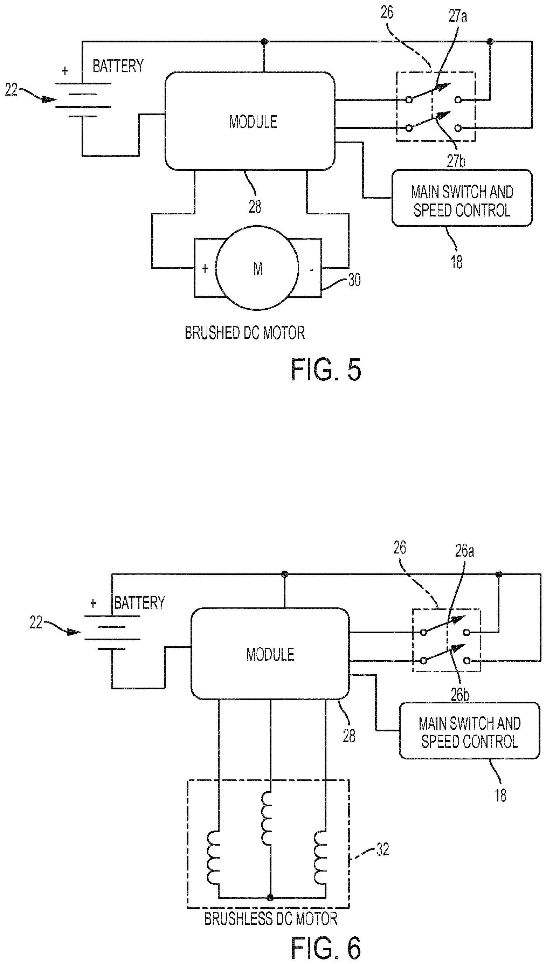

Fig. 5 shows a circuit diagram of the winding button 26 shown in Fig. 4. The first contact 26a provides power to the module 28, and the second contact 26b instructs the module 28 to operate at a reduced speed and reverse rotational direction. Although the figure shows a brushed DC motor 30, it should be understood that almost any motor could be used with the invention and still fall within its scope. For example, Fig. 6 is similar to Fig. 5 except that the motor shown is a brushless DC motor 32. Additionally, it should be understood that a separate motor, dedicated for winding the line, could be used and still fall within the scope of the invention.

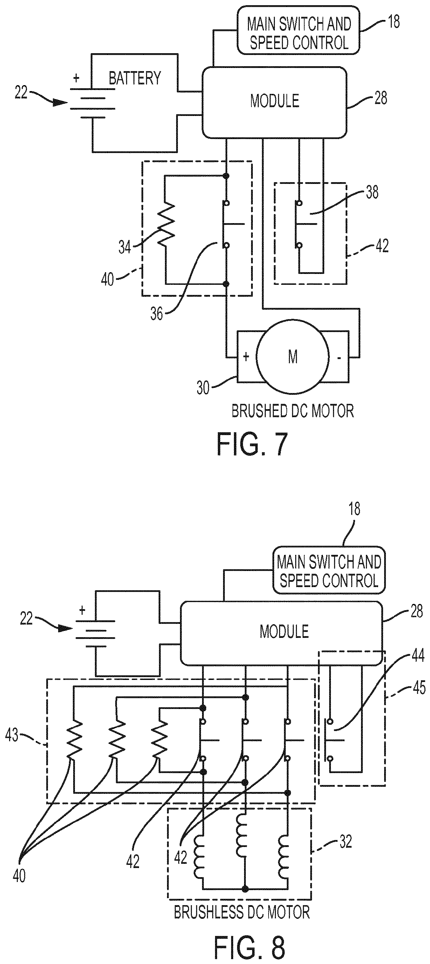

Fig. 7 shows an alternative circuit design that uses a resistive element 34 connected to the switch 36 to reduce the speed of the motor 30. This is in contrast to Figs. 5 and 6 where both speed and motor direction are controlled electronically in the module 28. Here, in normal operation, the switch 36 is closed and so the resistor 34 is shorted out. Actuating the button 26 however opens the switch 36 forcing the current to pass through the resistor 34 and thus reduce the motor's speed. A second switch 38 is connected to the module 28 and controls the direction of the motor 30. A single button, like the button 26, controls the actuation of both switches 36 and 38. Here, the speed of the motor 30 is controlled through hardware, eg. a resistor 34, rather than electronically through the control module 28.

Furthermore, the circuit shows that the current from the battery 22 to the motor 30 is carried through a speed portion 40 of the circuit. The direction portion 42 of the circuit is low current trigger signals the module to reverse motor direction.

Fig. 8 is similar to Fig. 7, in that it shows using resistors to control the speed of the motor 32. Here, because a brushless DC motor 32 is used, three resistors 40 are needed, and are controlled by three switches 42. The switches are controlled simultaneously, and for simplicity may be referred to in the singular. Like the circuit in Fig. 7, the switch 42, when open, forces current to go through the resistors 40 and consequently reduces the motor speed. This portion of the circuit is referred to as the speed control 43. Also, like the circuit in Fig. 7, the separate switch 44 controls the direction of the motor 32 by providing a signal to the module 28, with this portion of the circuit referred to as the direction control 45. Current to the motor 32 is provided through the speed control 43, and the direction control 45 is a low current trigger to reverse motor direction.

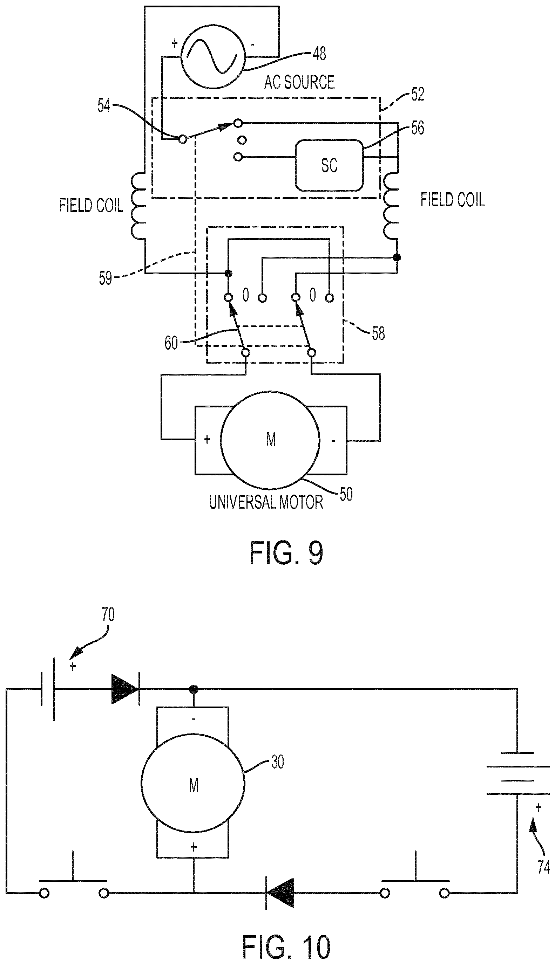

Fig. 9 is a circuit diagram showing a circuit for use with an AC power source 48 and universal motor 50. In this circuit, control of both the speed and direction of the motor 50 is controlled through circuit elements in the circuit, and not done through software in a control module. The speed of the motor 50 is controlled in a speed control portion 52 of the circuit that includes a switch 54 that has three positions. The first position, as shown in the diagram, shows the tool in a normal speed operating mode. A second middle position, if an "off" position. A third position, connects the AC power source 48 to a speed control module 56, which can be a diode, to reduce the speed of the motor to a low speed operating mode.

The direction of the motor is controlled by a direction control portion 58 of the circuit having a switch 60 that is capable of switching the terminals ends between the AC power source 48 and motor 50. As shown in the diagram, when the switch 60 is in a first position, the motor 50 rotates in a first direction. A second, middle position, is an off position, and in the third position, the switch 60 reverses the terminals so that the motor 50 rotates in an opposite direction.

A linkage 59, connects the switch 54 to the switch 60, either mechanically or electrically. Therefore, when switch 54 is the normal operating position, the switch 60 is in a first position so that the motor 50 rotates in a first direction at a normal operating speed. When the user turns the switch 54 to the off position, nothing happens to switch 60, and the string trimmer is off. When the user turns the switch 54 to the low speed position, the linkage 59 automatically moves the switch 60 to the off position, and the string trimmer is off. A separate winding button, like the earlier winding button 26, can then be actuated which moves the switch 60 to the third position, which reverses and powers the motor at low speed to wind cutting line. The switch 54 can be a three position main trigger and the switch 60 can be the winding button.

Turning to Fig. 10, a circuit diagram is shown that uses a second small voltage battery 70 to power a motor 72 for the spool winding. A higher voltage battery 74 is connected to the motor 70 for operational use. A switch 76 connects the higher voltage battery to the motor 72, and a second switch 78 connects the low voltage battery. The connection of the terminals of the low voltage battery 70 are reversed from the high voltage battery 74, and so the motor turns in reverse. Also, the battery itself provides the power to run the motor 30 at low speed.

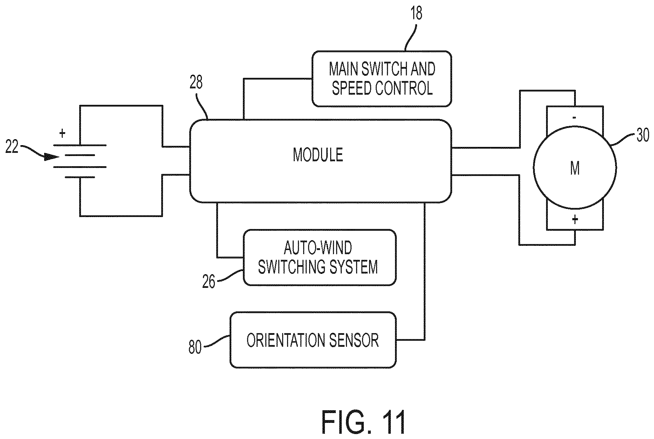

Fig. 11 shows a circuit similar to that shown in Fig. 5. The operation of the power winding button 26 here, although depicted differently, operates in the same or similar way to that described in Fig. 5. However, the circuit of Fig. 11 adds a sensor 80 that detects the orientation of the trimmer 10. So if the trimmer is inverted, like in Fig. 2, the sensor 80 would detect this and lock out the main trigger 18 to prevent the trimmer from operating. This would keep the spool from rotating at a high speed and injuring the user. Only the winding button 26 will operate to wind line onto the spool in this orientation. By means of example only, the sensor 80 can be a gravity switch, a gyroscope, an accelerometer or a magnetometer.

Furthermore, an interlock mechanism, either mechanical or electronic, can be added to the system to prevent the button 26 from being actuated simultaneously with the main trigger 18.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A string trimmer comprising:
a shaft (12) having a cutting head (14) on one end, the cutting head having a motor, spool housing and a spool,
the motor operationally connected to the spool to rotate the spool in a normal operational mode for cutting vegetation having a first direction and first speed; and **characterized by**:
a button (26) configured to actuate a winding mode for winding cutting line onto the spool,
wherein, in the winding mode, the motor is configured to rotate the spool in a second direction, opposite the first direction, and
wherein, in the winding mode, the motor is configured to rotate the spool at a second speed that is slower than the first speed.

2. The string trimmer of claim 1, wherein the button (26) is positioned adjacent the cutting head (14).

3. The string trimmer of any preceding claim, further comprising:
a control module (28) connected to the motor to control operation of the motor,
wherein the button (26) is connected to the control module.

4. The string trimmer of any of any preceding claim, wherein a main trigger (18) for actuating the normal operational mode is located on a second end of the shaft (12).

5. A method of winding cutting line onto a spool comprising the steps of:
providing a string trimmer having a motor, a cutting head (14) with a spool housing and a spool, and a winding button (26);
inserting new cutting line into the spool; and
actuating the winding button so that the spool rotates and winds cutting line onto the spool, and **characterised in that**
the motor is operatively connected to the spool to rotate the spool during normal operations in a first direction and at a first speed, and actuation of the winding button rotates the spool in a second direction opposite the first direction, and at a second speed slower than the first speed.

6. The method of claim 5, further comprising the step of grabbing the spool housing prior to actuating the winding button (26).

7. The method of claim 6, wherein the winding button (26) is located adjacent the cutting head (14).

## Patentansprüche

1. Motorsense, die Folgendes umfasst:
einen Schaft (12) mit einem Schneidkopf (14) an einem Ende, wobei der Schneidkopf einen Motor, ein Spulengehäuse und eine Spule aufweist,
wobei der Motor, der betriebswirksam mit der Spule verbunden ist, um die Spule in einem normalen Betriebsmodus zum Schneiden von Vegetation zu drehen, eine erste Richtung und eine erste Geschwindigkeit aufweist; und
**gekennzeichnet durch**:
einen Knopf (26), der dazu konfiguriert ist, einen Aufwickelmodus zum Aufwickeln von Schneidleine auf die Spule zu betätigen,
wobei der Motor, im Aufwickelmodus, dazu konfiguriert ist, die Spule in eine zweite Richtung zu drehen, die der ersten Richtung entgegengesetzt ist, und
wobei der Motor, im Aufwickelmodus, dazu konfiguriert ist, die Spule mit einer zweiten Geschwindigkeit zu drehen, die langsamer ist als die erste Geschwindigkeit.

2. Motorsense nach Anspruch 1, wobei der Knopf (26) neben dem Schneidkopf (14) angeordnet ist.

3. Motorsense nach einem der vorhergehenden Ansprüche, die ferner Folgendes umfasst:
ein Steuerungsmodul (28), das mit dem Motor verbunden ist, um den Betrieb des Motors zu steuern,
wobei der Knopf (26) mit dem Steuermodul verbunden ist.

4. Motorsense nach einem der vorhergehenden Ansprüche, wobei ein Hauptauslöser (18) zum Betätigen des normalen Betriebsmodus sich an einem zweiten Ende des Schafts (12) befindet.

5. Verfahren zum Aufwickeln von Schneidleine auf eine Spule, das die folgenden Schritte umfasst:
Bereitstellen einer Motorsense, die einen Motor, einen Schneidkopf (14) mit einem Spulengehäuse und einer Spule, und einen Aufwickelknopf (26) aufweist;
Einführen einer neuen Schneidleine in die Spule; und
Betätigen des Aufwickelknopfs, so dass sich die Spule dreht und Schneidleine auf die Spule wickelt, und **dadurch gekennzeichnet, dass**
der Motor betriebswirksam mit der Spule verbunden ist, um die Spule während normalen Betriebs in einer ersten Richtung und mit einer ersten Geschwindigkeit zu drehen, und dass eine Betätigung des Aufwickelknopfs die Spule in einer zweiten Richtung, entgegengesetzt zur ersten Richtung, und mit einer zweiten Geschwindigkeit, die langsamer als die erste Geschwindigkeit ist, dreht.

6. Verfahren nach Anspruch 5, das ferner den Schritt des Ergreifens des Spulengehäuses vor dem Betätigen des Aufwickelknopfs (26) umfasst.

7. Verfahren nach Anspruch 6, wobei der Aufwickelknopf (26) sich neben dem Schneidkopf (14) befindet.

## Revendications

1. Tondeuse à fil comprenant :
un arbre (12) comportant une tête de coupe (14) sur une extrémité, la tête de coupe comportant un moteur, un logement de bobine et une bobine,
le moteur relié de manière fonctionnelle à la bobine pour faire tourner la bobine dans un mode de fonctionnement normal pour couper une végétation ayant une première direction et une première vitesse ; et **caractérisée par** :
un bouton (26) configuré pour actionner un mode d'enroulement pour enrouler une ligne de coupe sur la bobine,
dans laquelle, dans le mode d'enroulement, le moteur est configuré pour faire tourner la bobine dans une seconde direction, opposée à la première direction, et
dans laquelle, dans le mode d'enroulement, le moteur est configuré pour faire tourner la bobine à une seconde vitesse qui est plus lente que la première vitesse.

2. Tondeuse à fil selon la revendication 1, dans laquelle le bouton (26) est positionné adjacent à la tête de coupe (14).

3. Tondeuse à fil selon l'une quelconque des revendications précédentes, comprenant en outre :
un module de commande (28) relié au moteur pour commander le fonctionnement du moteur,
dans laquelle le bouton (26) est relié au module de commande.

4. Tondeuse à fil selon l'une quelconque des revendications précédentes, dans laquelle une détente principale (18) pour actionner le mode de fonctionnement normal est située sur une seconde extrémité de l'arbre (12).

5. Procédé d'enroulement d'une ligne de coupe sur une bobine comprenant les étapes de :
fourniture d'une tondeuse à fil comportant un moteur, une tête de coupe (14) dotée d'un logement de bobine et d'une bobine, et un bouton d'enroulement (26) ;
insertion d'une nouvelle ligne de coupe dans la bobine ; et
actionnement du bouton d'enroulement de sorte que la bobine fait tourner et enroule la ligne de coupe sur la bobine, et **caractérisé en ce que**
le moteur est relié de manière fonctionnelle à la bobine pour faire tourner la bobine en fonctionnement normal dans une première direction et à une première vitesse, et l'actionnement du bouton d'enroulement fait tourner la bobine dans une seconde direction opposée à la première direction, et à une seconde vitesse plus lente que la première vitesse.

6. Procédé selon la revendication 5, comprenant en outre l'étape de saisie du logement de bobine avant l'actionnement du bouton d'enroulement (26).

7. Procédé selon la revendication 6, dans lequel le bouton d'enroulement (26) est situé adjacent à la tête de coupe (14).
